# EUROPEAN PATENT APPLICATION

(11) **EP 4 819 697 A1**
(43) Date of publication of application: **07.10.2026**
(21) Application number: 25738861.1
(22) Date of filing: 03.01.2025
(51) Int. Cl.: H04W 48/18, H04W 48/08, H04W 60/00, H04W 76/11, H04W 76/30

(54) **METHOD AND DEVICE FOR SUPPORTING SLICE REPLACEMENT IN CONSIDERATION OF MOBILITY IN WIRELESS COMMUNICATION SYSTEM**

(30) Priority: 09.01.2024 KR 20240003603
(71) Applicant: Samsung Electronics Co., Ltd., Suwon-si, Gyeonggi-do 16677 (KR)
(72) Inventor: SUH, Dongeun, Suwon-si, Gyeonggi-do 16677 (KR); LEE, Hoyeon, Suwon-si, Gyeonggi-do 16677 (KR)
(74) Representative: Gulde & Partner
(86) International application number: PCT/KR2025/000096
(87) International publication number: WO 2025/150785

(57) **Abstract**

The present disclosure relates to a method performed by a first access and mobility management function (AMF) of a communication system, the method comprising the steps of: transmitting, to a second AMF, a first message including information indicating whether network slice replacement (NSR) is supported; when the first AMF does not support the NSR, receiving, from the second AMF, a second message for the first AMF that does not support the NSR; and transmitting, to a terminal, a third message including information about network slice selection assistance information (NSSAI), wherein, when the first AMF does not support the NSR, information related to the NSR is excluded from the second message and the third message.

## Description

### [Technical Field]

The disclosure relates to a method or device for providing a service by considering whether a network slice replacement function is supported according to a location of a terminal in a wireless communication system.

### [Background Art]

5G mobile communication technology defines a wide frequency band to enable a fast transmission speed and new services, and may be implemented not only in a frequency ('sub 6 GHz') band of 6 GHz or less such as 3.5 GHz, but also in an ultra high frequency band ('above 6 GHz') called a mmWave such as 28 GHz and 39 GHz. Further, in the case of 6G mobile communication technology, which is referred to as a beyond 5G system, in order to achieve a transmission speed that is 50 times faster than that of 5G mobile communication technology and ultra-low latency reduced to 1/10 compared to that of 5G mobile communication technology, implementations in terahertz bands (e.g., 95 GHz to 3 terahertz (3 THz) band) are being considered.

In the early days of 5G mobile communication technology, with the goal of satisfying the service support and performance requirements for an enhanced mobile broadband (eMBB), ultra-reliable low-latency communications (URLLC), and massive machine-type communications (mMTC), standardization has been carried out for beamforming and massive multi-input multi-output (MIMO) for mitigating a path loss of radio waves in an ultra-high frequency band and increasing a propagation distance of radio waves, support for various numerologies (multiple subcarrier spacing operation, and the like) for efficient use of ultra-high frequency resources and dynamic operation for slot formats, initial access technology for supporting multi-beam transmission and broadband, a definition and operation of a band-width part (BWP), a new channel coding method such as low density parity check (LDPC) code for large capacity data transmission and polar code for high reliable transmission of control information, L2 pre-processing, and network slicing that provides a dedicated network specialized for specific services.

Currently, discussions are ongoing to improve initial 5G mobile communication technology and enhance a performance thereof in consideration of services in which 5G mobile communication technology was intended to support, and physical layer standardization for technologies such as vehicle-to-everything (V2X) for helping driving determination of an autonomous vehicle and increasing user convenience based on a location and status information of the vehicle transmitted by the vehicle, new radio unlicensed (NR-U) for the purpose of a system operation that meets various regulatory requirements in unlicensed bands, NR UE power saving, a non-terrestrial network (NTN), which is direct UE-satellite communication for securing coverage in regions where communication with a terrestrial network is impossible, and positioning is in progress.

Further, standardization in the field of air interface architecture/protocol for technologies such as industrial Internet of things (IIoT) for supporting new services through linkage and convergence with other industries, integrated access and backhaul (IAB) that provides nodes for expanding network service regions by integrating wireless backhaul links and access links, mobility enhancement including conditional handover and dual active protocol stack (DAPS) handover, and 2-step RACH for NR that simplifies a random access procedure is also in progress, and standardization in the system architecture/service field for 5G baseline architecture (e.g., service based architecture, service based interface) for applying network functions virtualization (NFV) and software-defined networking (SDN) technologies, mobile edge computing (MEC) that receives services based on a location of a UE, and the like is also in progress.

When such a 5G mobile communication system is commercialized, connected devices in an explosive increase trend will be connected to communication networks; thus, it is expected that function and performance enhancement of a 5G mobile communication system and integrated operation of connected devices will be required. To this end, new research on eXtended reality (XR) for efficiently supporting augmented reality (AR), virtual reality (VR), mixed reality (MR), and the like, 5G performance improvement and complexity reduction using artificial intelligence (AI) and machine learning (ML), AI service support, metaverse service support, and drone communication will be conducted.

Further, the development of such a 5G mobile communication system will be the basis for the development of full duplex technology for improving frequency efficiency and system network of 6G mobile communication technology, satellite, artificial intelligence (AI)-based communication technology that utilizes AI from a design stage and that realizes system optimization by internalizing end-to-end AI support functions, and next generation distributed computing technology that realizes complex services beyond the limits of UE computing capabilities by utilizing ultra-high performance communication and computing resources as well as a new waveform for ensuring coverage in a terahertz band of 6G mobile communication technology, full dimensional MIMO (FD-MIMO), multi-antenna transmission technologies such as an array antenna and large scale antenna, metamaterial-based lenses and antennas for improving coverage of terahertz band signals, high-dimensional spatial multiplexing technology using orbital angular momentum (OAM), and reconfigurable intelligent surface (RIS) technology.

In some cases, one or all protocol data unit (PDU) sessions included in a network slice may need to be moved to another network slice. For example, congestion may occur among various 5G network entities belonging to a network slice, a particular slice may need to be temporarily or permanently suspended for operational reasons (e.g., equipment replacement or upgrade), or the performance of a network slice carrying application traffic may degrade, in which case the traffic may need to be moved to another slice.

In such cases, a network slice replacement function may be provided to ensure service continuity by performing data transmission and reception through an alternative network slice instead of an existing network slice. According to an embodiment, the network slice replacement function may be supported by a terminal and network equipment (e.g., AMF, SMF, and the like).

### [Disclosure]

### [Technical Problem]

According to an embodiment, in an environment where only some network equipment support a network slice replacement function, the network slice replacement function may be provided only in areas served by a network equipment that support the function. According to whether the network slice replacement function is supported at a location of a terminal, there may be a need for a method for updating terminal configuration information related to processing of associated sessions (e.g., a replaced PDU session, or a PDU session associated with a replaced network slice together with an alternative network slice).

According to an embodiment, if a network equipment does not support NSR, there may be a need for a method of releasing a replaced PDU session or updating terminal configuration information.

Technical problems to be achieved in the disclosure are not limited to the above-described technical problems, and other technical problems not described will be clearly understood by those of ordinary skill in the art to which the disclosure belongs from the description below.

### [Technical Solution]

Based on the discussion described above, the disclosure provides a method performed by a first access and mobility management function (AMF) of a communication system including
transmitting, to a second AMF, a first message including information indicating whether network slice replacement (NSR) is supported; receiving, from the second AMF, if the first AMF does not support the NSR, a second message for the first AMF that does not support the NSR; and transmitting, to a terminal, a third message including information on network slice selection assistance information (NSSAI), wherein, if the first AMF does not support the NSR, information related to the NSR is excluded from the second message and the third message.

Further, if the first AMF supports the NSR, the second message and the third message may include the information related to the NSR.

Further, the information related to the NSR may include at least one of information on a replaced protocol data unit (PDU) session, information on replaced single network slice selection assistance information (S-NSSAI), information on alternative S-NSSAI, or information on mapping associated with the alternative S-NSSAI.

Further, if the first AMF does not support the NSR, the information related to the NSR may be deleted by the terminal.

According to an embodiment, a method performed by a terminal of a communication system includes
receiving, from a first access and mobility management function (AMF), a third message including information on network slice selection assistance information (NSSAI), wherein a first message including information indicating whether network slice replacement (NSR) is supported is transmitted from the first AMF to a second AMF, and if the first AMF does not support the NSR, a second message for the first AMF not supporting the NSR is received by the first AMF from the second AMF, and if the first AMF does not support the NSR, information related to the NSR is excluded from the second message and the third message.

According to an embodiment, a first access and mobility management function (AMF) of a communication system includes a transceiver; and a controller connected to the transceiver and configured to transmit, to a second AMF, a first message including information indicating whether network slice replacement (NSR) is supported, to receive, from the second AMF, if the first AMF does not support the NSR, a second message for the first AMF not supporting the NSR, and to transmit, to a terminal, a third message including information on network slice selection assistance information (NSSAI), wherein, if the first AMF does not support the NSR, information related to the NSR is excluded from the second message and the third message.

According to an embodiment, a terminal of a communication system includes a transceiver; and a controller connected to the transceiver and configured to receive, from a first access and mobility management function (AMF), a third message including information on network slice selection assistance information (NSSAI), wherein a first message including information indicating whether network slice replacement (NSR) is supported is transmitted from the first AMF to a second AMF, and if the first AMF does not support the NSR, a second message for the first AMF not supporting the NSR is received by the first AMF from the second AMF, and if the first AMF does not support the NSR, information related to the NSR is excluded from the second message and the third message.

### [Advantageous Effects]

An embodiment of the disclosure provides for determining in advance whether a network equipment (e.g., AMF and/or SMF) serving a user equipment (UE) supports a network slice replacement function (NSR), and accordingly for efficiently processing replaced PDU sessions (e.g., PDU sessions associated with alternative S-NSSAI and S-NSSAI being replaced) and updating UE configuration information.

Effects that can be obtained from the disclosure are not limited to the above-described effects, and other effects that are not described will be clearly understood by those of ordinary skill in the art to which the disclosure belongs from the description below.

### [Description of Drawings]

FIG. 1 illustrates a communication network including core network entities in a wireless communication system according to various embodiments of the disclosure.
FIG. 2 is a signal flow diagram illustrating a method of processing associated PDU sessions and providing terminal configuration information according to whether an AMF supports NSR in a registration procedure.
FIG. 3 is a signal flow diagram illustrating a method of processing associated PDU sessions and providing terminal configuration information according to whether NSR is supported in a handover procedure.
FIG. 4 is a block diagram illustrating an example of a structure of a terminal according to an embodiment of the disclosure.
FIG. 5 is a block diagram illustrating an example of a structure of a base station according to an embodiment of the disclosure.

### [Mode for Disclosure]

Hereinafter, embodiments of the disclosure will be described in detail with reference to the accompanying drawings.

In describing the embodiments, descriptions of technical contents that are well known in the technical field to which the disclosure pertains and that are not directly related to the disclosure will be omitted.

This is to more clearly convey the gist of the disclosure without obscuring the gist of the disclosure by omitting unnecessary description.

For the same reason, some components are exaggerated, omitted, or schematically illustrated in the accompanying drawings. Further, the size of each component does not fully reflect the actual size. In each drawing, the same reference numerals are given to the same or corresponding components.

Advantages and features of the disclosure, and a method of achieving them will become apparent with reference to the embodiments described below in detail in conjunction with the accompanying drawings.

However, the disclosure is not limited to the embodiments disclosed below, but may be implemented in various different forms, and only embodiments of the disclosure enable the constitution of the disclosure to be complete, and are provided to fully inform the scope of the disclosure to those of ordinary skill in the art to which the disclosure pertains, and the disclosure is only defined by the scope of the claims. Like reference numerals refer to like components throughout the specification.

In this case, it will be understood that each block of flow diagrams and combinations of the flow diagrams may be performed by computer program instructions. Because these computer program instructions may be mounted in a processor of a general purpose computer, a special purpose computer, or other programmable data processing equipment, instructions performed by a processor of a computer or other programmable data processing equipment generate a means that performs functions described in the flow diagram block(s). Because these computer program instructions may be stored in a computer usable or computer readable memory that may direct a computer or other programmable data processing equipment in order to implement a function in a particular manner, the instructions stored in the computer usable or computer readable memory may produce a production article including instruction means for performing the function described in the flow diagram block(s). Because the computer program instructions may be mounted on a computer or other programmable data processing equipment, a series of operation steps are performed on the computer or other programmable data processing equipment to generate a computer-executable process; thus, instructions for performing the computer or other programmable data processing equipment may provide steps for performing functions described in the flow diagram block(s).

Further, each block may represent a portion of a module, a segment, or a code including one or more executable instructions for executing a specified logical function(s). Further, it should be noted that in some alternative implementations, functions recited in the blocks may occur out of order. For example, two blocks illustrated one after another may in fact be performed substantially simultaneously, or the blocks may be sometimes performed in the reverse order according to the corresponding function.

In this case, a term '-unit' used in this embodiment means software or hardware components such as a field programmable gate array (FPGA) or an application specific integrated circuit (ASIC), and '-unit' performs certain roles. However, '-unit' is not limited to software or hardware. '-unit' may be constituted to reside in an addressable storage medium or may be constituted to reproduce one or more processors. Therefore, as an example, '-unit' includes components such as software components, object-oriented software components, class components, and task components, processes, functions, properties, procedures, subroutines, segments of program code, drivers, firmware, microcode, circuit, data, databases, data structures, tables, arrays, and variables. Functions provided in the components and '-units' may be combined into a smaller number of components and '-units' or may be further separated into additional components and '-units'. Further, components and '-units' may be implemented to reproduce one or more CPUs in a device or secure multimedia card.

Hereinafter, for convenience of description, some of terms and names defined in the 3rd generation partnership project (3GPP) standards (standards for 5G, NR, LTE or similar systems) may be used. Further, terms and names newly defined in a next generation communication system (e.g., 6G, beyond 5G system) to which the disclosure may be applied, or terms and names used in existing communication systems may be used. The use of such terms is not limited by terms and names of the disclosure, and may be equally applied to systems conforming to other standards, and be changed into other forms without departing from the technical spirit of the disclosure. Embodiments of the disclosure may be easily modified and applied to other communication systems.

Further, it will be understood that singular expressions such as "a" and "the above" not clearly indicating different contents in an embodiment of the disclosure include plural expressions.

Further, in an embodiment of the disclosure, terms including ordinal numbers such as first, second, and the like may be used for describing various components, but the components are not limited by the terms. The terms are used only for the purpose of distinguishing one component from other components. For example, without departing from the scope of the disclosure, a first component may be referred to as the second component, and similarly, a second component may also be referred to as the first component.

Further, in an embodiment of the disclosure, the term and/or includes a combination of a plurality of related described items or any one of a plurality of related described items.

Further, terms used in an embodiment of the disclosure are used for only describing a particular embodiment and are not intended to limit the disclosure. The singular expression includes the plural expression unless the context clearly indicates otherwise. In this specification, it should be understood that terms "include" or "have" and the like are intended to specify that a feature, number, step, operation, component, part, or combination thereof described in the specification exists, but do not exclude in advance the possibility of the presence or addition of one or more other features, numbers, steps, operations, components, parts or combinations thereof.

Further, terms "associated with" and "associated therewith" and derivatives thereof used in an embodiment of the disclosure may mean include, be included within, interconnect with, contain, be contained within, connect to or with, couple to or with, be communicated with, cooperate with, interleave, juxtapose, be proximate to, be bound to or with, have, have a property of, and the like.

Further, in the disclosure, although expressions such as "greater than" or "less than" are used to determine whether a specific condition is satisfied or fulfilled, such expressions are merely used to illustrate examples and do not exclude the use of expressions such as "greater than or equal to" or "less than or equal to". A condition described as "greater than or equal to" may be replaced with "greater than", a condition described as "less than or equal to" may be replaced with "less than", and a condition described as "greater than or equal to and less than" may be replaced with "greater than and less than or equal to".

Further, although the disclosure describes embodiments using terms used in long term evolution (LTE) and new radio (NR)) defined in some communication standards (e.g., 3rd generation partnership project (3GPP)), this is only an example for description. Embodiments of the disclosure may be easily modified and applied in other communication systems.

Before a detailed description of the disclosure, examples of interpretable meanings of some terms used in this specification are provided. However, it should be noted that examples of interpretable meanings of some terms are not limited to interpretation examples provided below.

In the disclosure, a terminal (or communication terminal) is an entity that communicates with a base station or another terminal, and may be referred to as a node, a user equipment (UE), a next generation UE (NG UE), a mobile station (MS), a device, or a terminal. Further, the terminal may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), a moving picture experts group layer 3 (MP3) player, a medical device, a camera, or a wearable device. Further, the terminal may include at least one of a television, a digital video disk (DVD) player, an audio player, a refrigerator, an air conditioner, a vacuum cleaner, an oven, a microwave oven, a washing machine, an air purifier, a set-top box, a home automation control panel, a security control panel, a media box, a game console, an electronic dictionary, an electronic key, a camcorder, or an electronic picture frame. Further, the terminal may include at least one of various medical devices (e.g., various portable medical measuring devices (such as blood sugar meter, heart rate meter, blood pressure meter, or body temperature meter), magnetic resonance angiography (MRA) device, magnetic resonance imaging (MRI) device, computed tomography (CT) device, imaging device, or ultrasound device), a navigation device, a global navigation satellite system (GNSS), an event data recorder (EDR), a flight data recorder (FDR), an automobile infotainment device, electronic equipment for ships (e.g., navigation device for ships, gyro compass), avionics, a security device, a head unit for vehicles, an industrial or household robot, a drone, an ATM of a financial institution, a point of sales (POS) of a store, or an Internet of Things device (e.g., light bulb, various sensors, sprinkler device, fire alarm, thermostat, streetlight, toaster, exercise equipment, hot water tank, heater, boiler). Further, the terminal may include various types of multimedia systems capable of performing a communication function. The disclosure is not limited to the above description, and the terminal may be referred to by terms having the same or similar meaning.

Further, in the disclosure, the base station is an entity that communicates with a terminal and performs resource allocation of the terminal, and may have various forms and be referred to as a base station (BS), a nodeB (NB), a next generation radio access network (NG RAN), an access point (AP), a transmission reception point (TRP), a wireless access unit, a base station controller, or a node on a network. Alternatively, the base station may be referred to as a central unit (CU) or a distributed unit (DU) according to function separation. The disclosure is not limited thereto, and the base station may be referred to by a term having the same meaning or a similar meaning.

Further, in the disclosure, a radio resource control (RRC) message may be referred to as higher level information, a higher level message, a higher level signal, higher level signaling, or higher layer signaling, and the disclosure is not limited thereto, and the RRC message may be referred to by terms having the same meaning or a similar meaning.

Further, in the disclosure, data may be referred to as user data, user plane (UP) data, or application data or may be referred to by terms having the same or similar meaning as that of signals transmitted and received via a data radio bearer (DRB).

Further, in the disclosure, the direction of data transmitted from a terminal may be referred to as uplink, and the direction of data transmitted to the terminal may be referred to as downlink. Accordingly, in the case of uplink transmission, a transmitter may refer to a terminal, and a receiver may refer to a base station or a specific network entity of a communication system. Alternatively, in the case of downlink transmission, a transmitter may refer to a base station or a specific network entity of a communication system, and a receiver may refer to a terminal.

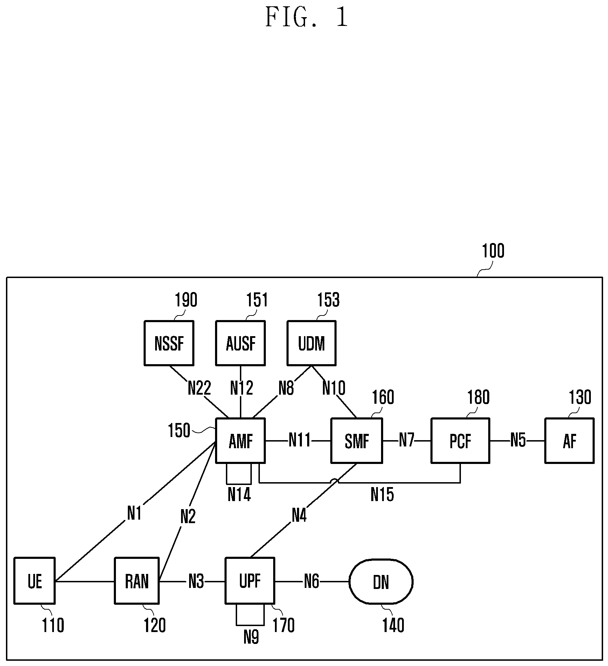

FIG. 1 illustrates a communication network including core network entities in a wireless communication system according to embodiments of the disclosure. A 5G mobile communication network may include a 5G user equipment (UE) 110, a 5G radio access network (RAN) 120, and a 5G core network.

The 5G core network may include network functions such as an access and mobility management function (AMF) 150 that provides a mobility management function of the UE, a session management function (SMF) 160 that provides a session management function, a user plane function (UPF) 170 that performs a data forwarding role, a policy control function (PCF) 180 that provides a policy control function, a unified data management (UDM) 153 that provides a data management function such as subscriber data and policy control data, or a unified data repository (UDR) that stores data of various network functions.

With reference to FIG. 1, the user equipment (UE) 110 may communicate via a wireless channel, that is, an access network established with a base station (e.g., an eNB or a gNB). In some embodiments, the UE 110 may be a device used by a user and configured to provide a user interface (UI). As an example, the UE 110 may be a terminal equipped on a vehicle for driving. In some other embodiments, the UE 110 may be a device that performs machine type communication (MTC) operating without user intervention, or may be an autonomous vehicle. The UE may also be referred to as a terminal, a vehicle terminal, a user equipment (UE), a mobile station, a subscriber station, a remote terminal, a wireless terminal, a user device, or other terms having equivalent technical meanings, other than electronic devices. In addition to the UE, a customer-premises equipment (CPE) or a dongle-type terminal may be used as the terminal. The CPE, while being connected to an NG-RAN node like the UE, may also provide a network to other communication equipment (e.g., laptop computer).

With reference to FIG. 1, the AMF 150 provides functions for access and mobility management on a UE 110 basis, and one AMF 150 may be basically connected to one UE 110. Specifically, the AMF 150 may perform at least one of signaling between core network nodes for mobility between 3GPP access networks, an interface (N2 interface) between wireless access networks (e.g., 5G RAN) 120, NAS signaling with the UE 110, identification of the SMF 160, or delivery of session management (SM) messages between the UE 110 and the SMF 160. Some or all of the functions of the AMF 150 may be supported within a single instance of an AMF 150.

With reference to FIG. 1, the SMF 160 provides session management functions, and when the UE 110 has multiple sessions, each session may be managed by a different SMF 160. Specifically, the SMF 160 may perform at least one of session management (e.g., session establishment, modification, and release, including maintenance of a tunnel between the UPF 170 and an access network node), selection and control of user plane (UP) functions, traffic steering configuration for routing traffic from the UPF 170 to an appropriate destination, termination of the SM portion of NAS messages, downlink data notification (DDN), or initiation of AN-specific SM information (e.g., delivery to the access network via the N2 interface through the AMF 150). Some or all of the functions of the SMF 160 may be supported within a single instance of a SMF 160.

In the 3GPP system, conceptual links connecting NFs within a 5G system may be referred to as reference points. Reference points may also be referred to as interfaces. The following illustrates reference points (hereinafter, interchangeably referred to as interfaces) included in the 5G system architecture according to various embodiments of the disclosure.
- N1: Reference point between the UE 110 and the AMF 150
- N2: Reference point between the (R)AN 120 and the AMF150
- N3: Reference point between the (R)AN 120 and the UPF170
- N4: Reference point between the SMF 160 and the UPF 170
- N5: Reference point between the PCF 180 and an AF 130
- N6: Reference point between the UPF 170 and a DN 140
- N7: Reference point between the SMF 160 and the PCF 180
- N8: Reference point between the UDM 153 and the AMF 150
- N9: Reference point between two core UPFs 170
- N10: Reference point between the UDM 153 and the SMF 160
- N11: Reference point between the AMF 150 and the SMF 160
- N12: Reference point between the AMF 150 and an authentication server function (AUSF) 151
- N13: Reference point between the UDM 153 and the AUSF 151
- N14: Reference point between two AMFs 150
- N15: Reference point between the PCF 180 and the AMF 150 for non-roaming scenarios, and reference point between the PCF 180 and the AMF 150 within a visited network for roaming scenarios.

In 5G systems, network slicing technology may refer to technology and architecture that enables multiple virtualized, independent, and logical networks within a single physical network. Network operators may provide services by configuring virtual end-to-end networks called network slices to meet specialized requirements of services and applications. In this case, network slices may be identified by an identifier called single-network slice selection assistance information (S-NSSAI). During a registration procedure (e.g., UE registration procedure), the network may transmit a set of allowed slices (e.g., allowed NSSAI(s)) to the UE, and the UE may transmit and receive application data through a protocol data unit (PDU) session established using one of these S-NSSAIs (i.e., network slices).

The 5G mobile communication network may include a 5G user equipment (UE), a 5G radio access network (RAN), and a 5G core network. The 5G core network may include network functions (NFs) such as an access and mobility management function (AMF) that provides a mobility management function for the UE, a session management function (SMF) that provides a session management function, a user plane function (UPF) that performs a data forwarding role, a policy control function (PCF) that provides a policy control function, a unified data management (UDM) that provides a data management function such as subscriber data and policy control data, and a unified data repository (UDR) that stores data of various network functions (NFs) such as the UDM.

In 5G systems, network slicing technology may refer to technology and architecture that enables multiple virtualized and independent logical networks within a single physical network. Network operators may provide services by configuring virtual end-to-end networks called network slices to meet specialized requirements of services and applications. Network slices may be identified by an identifier called single-network slice selection assistance information (S-NSSAI), and network operators may provide network slice(s) to UEs to enable the UEs to receive services.

Specifically, in a 5G system, during a network registration procedure, the UE may transmit, to the AMF, identifier information for network slices that the UE intends to request (e.g., requested S-NSSAIs), and the AMF may provide the UE with information on network slices that the UE is allowed to use (e.g., allowed NSSAI) by considering the requested S-NSSAIs and subscriber information. Even when the UE does not provide any requested information on slices, the AMF may provide the allowed NSSAI to the UE, and in this case, the allowed NSSAI may include information on default configured slices (e.g., default configured NSSAI) and information on slices configured as default among subscription slices included in the UE subscriber information (e.g., default subscribed S-NSSAIs).

If the allowed NSSAI cannot include any slices (e.g., if the default configured NSSAI and default subscribed S-NSSAIs are missing or unavailable), the AMF may transmit, to the UE, a network registration reject message including a cause code indicating that the registration is rejected due to no available slices.

When a slice is to be included in the allowed NSSAI of the UE, a network slice admission control (NSAC) procedure and a network slice-specific authentication and authorization (NSSAA) procedure for the slice may be performed. In the NSAC procedure, whether to allow the slice may be determined based on the number of UEs currently registered for the specific slice and the maximum number of registered UEs allowed for the slice (e.g., determine whether to include the slice in the allowed NSSAI). As a specific example, a network slice admission control function (NSACF) may monitor, for network slices that are targets of NSAC, the number of registered UEs and the number of established PDU sessions for each slice, and control the number of registered UEs and the number of established PDU sessions for each slice to be maintained to be lower than a maximum number of registered UEs and a maximum number of PDU sessions, respectively.

In this case, when a new UE is registered for a slice that is a target of NSAC or when an existing registered UE is deregistered, the AMF may transmit an update request message to notify the NSACF.

Further, according to an embodiment, when a new PDU session is created for a slice that is a target of NSAC or an existing PDU session is released, the SMF may transmit an update request message to notify the NSACF.

According to an embodiment, when the NSAC receives a message notifying registration of a new UE for a slice or a message notifying creation of a new PDU session, the NSAC may determine whether to allow the registration or the PDU session based on a maximum number of UEs and a maximum number of PDU sessions for the slice, and include the determination in each response message.

To transmit and receive data with a specific data network (DN) through allowed NSSAIs, the UE may select one of the allowed slices, request establishment of a packet data unit (PDU) session for a specific data network name (DNN) in the selected slice, and transmit and receive data through the established PDU session. The PDU session may include multiple traffic flows, and the traffic flows may include two types: a guaranteed bit rate (GBR) quality-of-service flow (QoS flow) and a non-GBR QoS flow.

There may be situations in which a network slice is unavailable (e.g., congestion occurs among various 5G network entities belonging to a network slice, a particular slice needs to be temporarily or permanently unavailable for operational reasons (e.g., equipment replacement and upgrade), or performance of a network slice carrying application traffic degrades and the traffic needs to be moved to another slice), and there may exist a function for providing a service through an alternative network slice for service continuity.

Specifically, in order to replace S-NSSAI being used by the UE (e.g., S-NSSAI being replaced) with alternative S-NSSAI (e.g., alternative network slice), the network may transmit, to the UE, information (e.g., mapping of alternative S-NSSAI) indicating that the UE is to use the alternative S-NSSAI instead of the S-NSSAI.

The PDU session(s) associated with the S-NSSAI being replaced of the UE are moved to alternative S-NSSAI, and the network (e.g., AMF and/or SMF) may store the S-NSSAI being replaced together with the alternative S-NSSAI as associated network slice information for the moved PDU session(s).

When new traffic to be transmitted by the UE using S-NSSAI being replaced occurs, if the UE stores information indicating that alternative S-NSSAI is to be used instead of the corresponding S-NSSAI (e.g., mapping of alternative S-NSSAI), the UE may transmit a PDU session establishment request message including the alternative S-NSSAI and the S-NSSAI being replaced.

According to an embodiment, such a network slice replacement function may be supported by UEs and network equipment (e.g., AMF, SMF, etc.).

In an environment in which only some network equipment supports a network slice replacement function, the network slice replacement function may be provided only in areas served by a network equipment supporting the function. According to whether the network slice replacement function is supported at the location of the UE, there may be a need for a method for updating UE configuration information related to processing related sessions (e.g., a replaced PDU session, or a PDU session associated with a network slice replaced with an alternative network slice).

For example, in this case, if the UE newly selects, due to movement, or the like, network equipment (e.g., AMF and/or SMF) that does not support a network slice replacement function (e.g., network slice replacement (NSR)) (e.g., if the UE receives a service through a network equipment that does not support NSR), the following problems may occur.
- Network equipment that does not support NSR (e.g., AMF or SMF) cannot process related sessions (e.g., replaced PDU sessions or PDU sessions associated with network slices replaced with alternative network slices).
- Network equipment that does not support NSR (e.g., AMF or SMF) cannot process NSR-related UE configuration information (e.g., mapping of alternative S-NSSAI).
- When the UE transmits a PDU session establishment request related to NSR (e.g., PDU session establishment request message including alternative S-NSSAI and S-NSSAI being replaced) to a network equipment that does not support NSR, the network equipment cannot process the request.

According to an embodiment, if the network equipment does not support NSR, a method may be required to release a replaced PDU session or update UE configuration information.

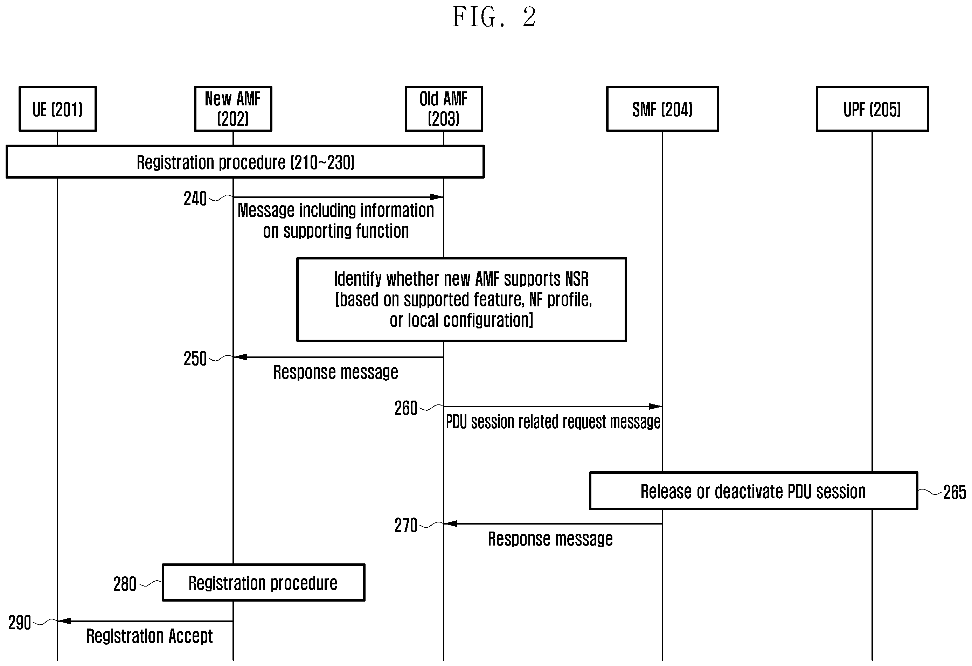

FIG. 2 is a signal flow diagram illustrating a method of processing associated PDU sessions and providing UE configuration information according to whether an AMF supports NSR in a registration procedure.

Further, FIG. 2 may correspond to a registration procedure related to an embodiment in an IDLE mode of a UE. With reference to FIG. 2, in step 210, a UE 201 may transmit an access network (AN) message (e.g., AN parameters, a registration request) to a base station (RAN). In this case, the registration request message may include at least one of a UE identifier (e.g., a subscription concealed identifier (SUCI), a 5G-globally unique temporary identity (5G-GUTI), or a permanent equipment identifier (PEI)), a registration type, requested NSSAI, a UE mobility management (MM) core network capability, a list of PDU sessions to be activated, or a PDU session status.

If the UE 201 supports a network slice replacement function, the UE 201 may include information indicating support for the function in a message transmitted to a base station or the like. For example, information indicating support for the network slice replacement function may be included in a UE MM core network capability of a registration request message of the UE 201.

When the UE 201 connects to a new base station, the UE 201 may determine that a network slice replacement function is not supported by the base station based on configuration information received in a previous registration procedure (e.g., a registration accept message transmitted by the AMF includes information indicating whether NSR is supported) or information received from the connected base station. In this case, the UE 201 may internally release (e.g., local release) a replaced PDU session(s) (e.g., a PDU session associated with alternative S-NSSAI and S-NSSAI being replaced, or a PDU session associated with two S-NSSAIs) and include, in a registration request message, a PDU session status excluding the corresponding PDU session(s). Release of the replaced PDU session(s) may be performed after transmitting the registration request message to the AMF.

According to an embodiment, the UE 201 may internally delete UE configuration information (e.g., information expressed as mapping of alternative S-NSSAI or mapping of S-NSSAI to alternative S-NSSAI) indicating that alternative S-NSSAI is to be used instead of S-NSSAI being replaced.

With reference to FIG. 2, in step 220, the RAN may select an AMF based on information in the AN message received from the UE 201.

In step 230, the RAN may transmit an N2 message (N2 parameters, registration request) to the AMF. The N2 parameters may include a selected PLMN ID, location information of the UE 201 (e.g., location information and a cell ID associated with a cell in which the UE 201 is camping (e.g., NG-RAN CGI)), or a UE context request.

Further, the N2 message may include an RAN ID, etc.

According to an embodiment, if a previous AMF of the UE 201 does not exist (e.g., if the registration request is an initial registration request, etc.) or if the AMF has not changed, steps 240 and 250 may be omitted.

Further, in the following steps, an old AMF 203 and a new AMF 202 may be referred to as a first AMF and a second AMF, respectively.

In step 240, if the AMF has changed, the new AMF 202 may identify the old AMF 203 for the UE 201 based on the 5G-GUTI included in the information received in step 230. The new AMF 202 may transmit a message (e.g., Namf_Communication_UEContextTransfer Request, etc.) including an access type of the UE 201, an identifier of the UE (e.g., 5G-GUTI or SUPI), and supported features to the old AMF 203. The supported features may include information on functions supported by an NF (e.g., the new AMF 202). If the new AMF 202 supports a network slice replacement function, the new AMF 202 may include the information in the supported features, and if the new AMF 202 does not support a network slice replacement function, the new AMF 202 may not include the information in the supported features. According to an embodiment, the old AMF 203 may determine whether the new AMF 202 supports network slice replacement. The old AMF 203 may determine based on information (e.g., supported features) included in a message received from the new AMF 202. For example, if the supported features do not include information indicating that network slice replacement is supported, the old AMF 203 may determine that the new AMF 202 does not support network slice replacement. Specifically, an indicator indicating that network slice replacement is supported may be included in the supported features, and a message including the indicator may be transmitted to a base station or an AMF. Further, the message may be transmitted via a non-access stratum (NAS) message.

According to an embodiment, when the old AMF 203 receives a message (e.g., Namf_Communication_UEContextTransfer Request) from the new AMF 202, the old AMF 203 may determine whether the new AMF 202 supports an NSR function. First, if supported features of the message from the new AMF 202 do not include information indicating that network slice replacement is supported, the old AMF 203 may determine that the new AMF 202 does not support network slice replacement.

Alternatively, the old AMF 203 may determine whether the new AMF 202 supports NSR based on information on the new AMF 202 received from a network repository function (NRF). For example, if the old AMF 203 transmits an NF discovery message to the NRF, and the NRF transmits a response message thereto, and if an NF profile for the new AMF 202 in the response message does not include information indicating that network slice replacement is supported, the old AMF 203 may determine that the new AMF 202 does not support network slice replacement.

In step 250, when the old AMF 203 receives a UE context request message from the new AMF 202 in step 240, the old AMF 203 may include information including a UE context in a response message (e.g., Namf_Communication_UEContextTransfer response) transmitted to the new AMF 202. For example, if the old AMF 203 determines in step 240 that the new AMF 202 does not support network slice replacement, the old AMF 203 may include the UE context, excluding information associated with network slice replacement, in the message transmitted to the new AMF 202. The information associated with network slice replacement may include, for example, context information (e.g., a PDU session ID, S-NSSAI, alternative S-NSSAI, an access type, a RAT type, an SMF ID, a PCF ID, etc.) for a replaced PDU session (e.g., a PDU session associated with alternative S-NSSAI and S-NSSAI being replaced, or a PDU session associated with two S-NSSAIs). Further, there may be UE configuration information indicating that alternative S-NSSAI is to be used instead of S-NSSAI being replaced (e.g., information expressed as mapping of alternative S-NSSAI or mapping of S-NSSAI to alternative S-NSSAI).

Further, according to an embodiment, if the old AMF 203 determines in step 240 that the new AMF 202 does not support network slice replacement, the old AMF 203 may remove replaced S-NSSAI and corresponding alternative S-NSSAI from allowed NSSAI included in the UE context transmitted to the new AMF 202.

According to an embodiment, if the old AMF 203 determines in step 240 that the new AMF 202 does not support network slice replacement, the old AMF 203 may remove alternative S-NSSAI corresponding to replaced S-NSSAI from configured NSSAI included in the UE context transmitted to the new AMF 202.

Further, according to an embodiment, a message or information (e.g., UE context information) transmitted to the new AMF 202 may be configured to exclude information associated with network slice replacement.

In step 260, if the UE context includes context information (e.g., a PDU session ID, S-NSSAI, alternative S-NSSAI, an access type, a RAT type, an SMF ID, a PCF ID, etc.) for a replaced PDU session (e.g., a PDU session associated with alternative S-NSSAI and S-NSSAI being replaced, or a PDU session associated with two S-NSSAIs), and if the old AMF 203 determines in step 240 that the new AMF 202 does not support a network slice replacement function or if the old AMF 203 transmits a UE context excluding context information for the replaced PDU session to the new AMF 202 in step 250 (e.g., if the old AMF 203 does not transmit context information for the replaced PDU session to the new AMF 202), the old AMF 203 may transmit a PDU session release request message to one or more SMFs 204 responsible for the corresponding PDU session(s). Specifically, the old AMF 203 may transmit, for each PDU session, a message (e.g., Nsmf_ReleaseSMContext request) including an SM context ID of the PDU session to the SMF 204 responsible for the PDU session in order to release the corresponding PDU session(s).

According to an embodiment, if the UE context includes context information (e.g., a PDU session ID, S-NSSAI, alternative S-NSSAI, an access type, a RAT type, an SMF ID, a PCF ID, etc.) for a replaced PDU session (e.g., a PDU session associated with alternative S-NSSAI and S-NSSAI being replaced, or a PDU session associated with two S-NSSAIs), or if the old AMF 203 determines in step 240 that the new AMF 202 does not support a network slice replacement function, or if the old AMF 203 transmits a UE context excluding context information for the replaced PDU session to the new AMF 202 in step 250 (e.g., if the old AMF 203 does not transmit context information for the replaced PDU session to the new AMF 202), the old AMF 203 may transmit, for each PDU session, a message (e.g., Nsmf_UpdateSMContext request (e.g., SM context ID or PDU session ID, operation type (deactivate)) to the SMF 204 responsible for the PDU session in order to deactivate the corresponding PDU session(s).

In step 265, when the SMF 204 receives an Nsmf_ReleaseSMContext request message exemplified in step 260 from the old AMF 203, the SMF 204 may perform release of a PDU session for the SM context ID included in the received message. The SMF 204 may transmit an N4 message to a UPF 205 to release the PDU session.

According to an embodiment, when the SMF 204 receives an Nsmf_UpdateSMContext request message exemplified in step 260 from the old AMF 203, if an operation type included in the received message indicates deactivation, the SMF 204 may perform user plane (UP) deactivation for an SM context ID or a PDU session ID included in the message. The SMF 204 may transmit a message (e.g., N4 message) to the UPF 205 for UP deactivation of the PDU session.

In step 270, the SMF 204 may transmit, to the old AMF 203, a response message including a result indication (e.g., success or failure as a result of processing). According to an embodiment, the response message may be an Nsmf_ReleaseSMContext response or an Nsmf_UpdateSMContext response according to the message received in step 260.

In step 280, the new AMF 202 may perform a registration procedure for the UE 201. The new AMF 202 may obtain subscriber information for the UE 201 from the UDM and perform registration, in the UDM, for an access type to which the UE 201 is connected. Further, step 280 may include other procedures for registration of the UE 201.

In step 290, the new AMF 202 may transmit a registration accept message to the UE 201 via the RAN.

According to an embodiment, the new AMF 202 may include PDU session context information, including identifier information for currently established PDU sessions, in the registration accept message. The new AMF 202 may include an updated PDU session status, etc., based on the PDU session context information included in the UE context received in step 250.

According to an embodiment, the new AMF 202 may include a PDU session ID(s) included in context information received from the old AMF 203 in the PDU session status. For example, if a registration request message received from the UE 201 includes a PDU session status, the new AMF 202 may include, in the PDU session status, only PDU session ID(s) included in the PDU session status received from the UE 201 among the PDU session ID(s) included in the context information received from the old AMF 203.

According to an embodiment, if the new AMF 202 supports a network slice replacement function or if the UE context received in step 250 includes information indicating that alternative S-NSSAI is to be used instead of S-NSSAI, the new AMF 202 may include mapping of alternative S-NSSAI (e.g., mapping information indicating that alternative S-NSSAI is to be used instead of S-NSSAI) and allowed NSSAI (e.g., allowed NSSAI including replaced S-NSSAI and corresponding alternative S-NSSAI) in the registration accept message transmitted to the UE 201.

According to an embodiment, if the new AMF 202 does not support a network slice replacement function, the new AMF 202 may remove replaced S-NSSAI and corresponding alternative S-NSSAI from allowed NSSAI and include the allowed NSSAI in the registration accept message transmitted to the UE 201.

According to an embodiment, if the new AMF 202 does not support a network slice replacement function, the new AMF 202 may remove alternative S-NSSAI corresponding to replaced S-NSSAI from configured NSSAI and include the updated configured NSSAI in the registration accept message transmitted to the UE 201. Further, the new AMF 202 may not include mapping of alternative S-NSSAI (e.g., mapping information indicating that alternative S-NSSAI is to be used instead of S-NSSAI) in the registration accept message transmitted to the UE 201.

With respect to step 290, a registration accept message may be delivered to the UE 201 via the RAN. Further, the message may include updated allowed NSSAI information, updated configured NSSAI information, updated PDU session status information, or information related to network slice replacement (e.g., mapping of alternative S-NSSAI).

According to an embodiment, if a received registration accept message does not include mapping of alternative S-NSSAI, the UE 201 may delete stored mapping of alternative S-NSSAI and delete S-NSSAI included in the mapping of alternative S-NSSAI and corresponding alternative S-NSSAI from stored allowed NSSAI.

According to an embodiment, if a received registration accept message does not include mapping of alternative S-NSSAI, the UE 201 may delete S-NSSAI included in the mapping of alternative S-NSSAI and corresponding alternative S-NSSAI from stored configured NSSAI.

According to an embodiment, if a received registration accept message includes a PDU session status, the UE 201 may internally release (e.g., local release) PDU sessions other than PDU session ID(s) included in the corresponding PDU session status.

According to an embodiment, when the UE determines that the AMF cannot support NSR based on a message received from the AMF (e.g., when the message received from the AMF does not include an NSR support indicator of the AMF or mapping of alternative S-NSSAI), the UE may release stored NSR-related mapping of alternative S-NSSAI, release one or more replaced PDU sessions associated with alternative S-NSSAI, update a PDU session status, and transmit the updated information to the AMF in a registration request message.

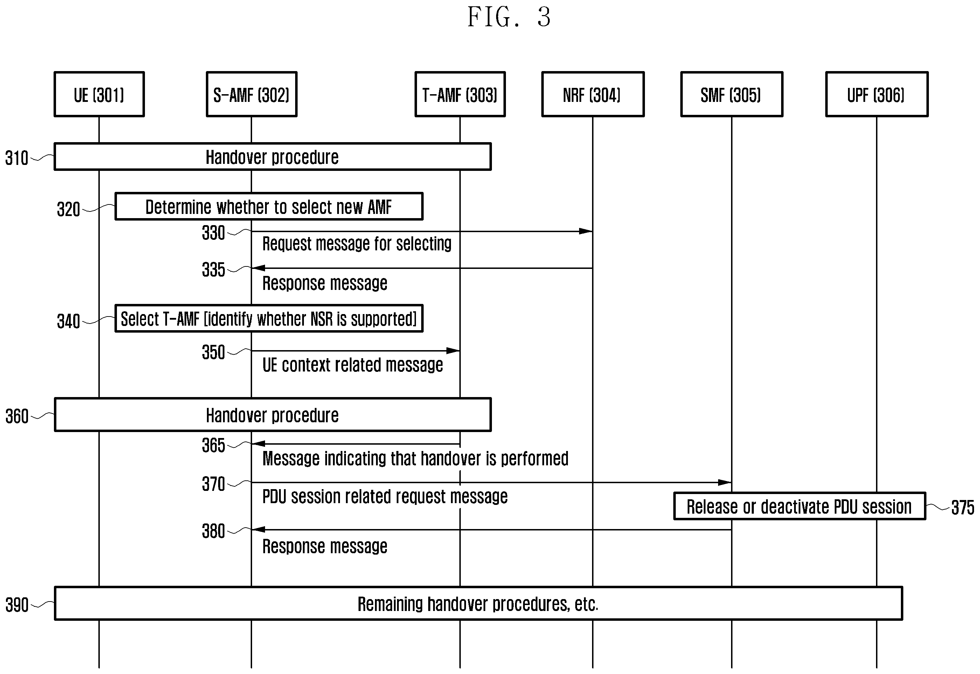

FIG. 3 is a signal flow diagram illustrating a method of processing associated PDU sessions and providing UE configuration information according to whether NSR is supported in a handover procedure.

According to an embodiment, FIG. 3 illustrates an operation of a UE in a connected mode. With reference to FIG. 3, in step 310, an N2-based handover procedure may be performed. A source NG-RAN (S-NG-RAN) may transmit, to an S-AMF 302 (i.e., old AMF 302), a message indicating that a handover is required. The message may include identifier information of PDU sessions managed by the S-RAN.

Further, according to an embodiment, the message transmitted by the S-NG-RAN to the S-AMF 302 may include information on a target RAN (T-RAN), and the S-RAN may determine that a network slice replacement function is not supported by the T-RAN. In this case, the S-RAN may release replaced PDU sessions (e.g., PDU sessions associated with alternative S-NSSAI and S-NSSAI being replaced, or PDU sessions associated with two S-NSSAIs) and include, in the message transmitted to the S-AMF 302 (e.g., the old AMF 302), identifier information of PDU sessions excluding the replaced PDU sessions. The release of the replaced PDU sessions may be performed after transmitting a handover request message to the S-AMF 302.

Further, according to an embodiment, a UE 301 may transmit, through a corresponding access, a message for release (e.g., PDU session release message) in order to release a multi-access (MA) PDU session for the corresponding access. Further, the AMF may transmit a message including information related to an access network (AN) type to an SMF 305, and the SMF 305 may determine that the release is for the corresponding AN type and perform the release.

In step 320, if the S-AMF 302 is no longer able to serve the UE 301 or according to a determination of the S-AMF 302, the S-AMF 302 may select a new target AMF (T-AMF) 303 (e.g., new AMF 303).

In step 330, the S-AMF 302 may transmit, to an NRF 304, a request message for selecting the T-AMF 303. The message may include a target NF type configured to AMF, a location configured to a current UE location, a consumer NF type configured to AMF, and an AMF capability configured by the S-AMF 302. If a replaced PDU session exists for the UE 301 or mapping of alternative S-NSSAI exists, the S-AMF 302 may include, in the AMF capability, information indicating support for network slice replacement. The information indicating the support may correspond to an indicator related to the AMF capability.

In step 335, the NRF 304 may include, in a response message transmitted to the S-AMF 302, an NF profile for a target NF (e.g., AMF) that satisfies the information included in the request message of step 330. The NF profile may include information indicating whether the NF supports network slice replacement.

In step 340, the S-AMF 302 may select the T-AMF 303 based on the NF profile included in the message of step 335. Further, based on the response message, the S-AMF 302 may determine whether the T-AMF 303 supports an NSR function.

For example, if supported features included in the message of step 335 do not include information indicating support for network slice replacement (or include information indicating non-support for network slice replacement), the S-AMF 302 may determine that the T-AMF 303 does not support a network slice replacement function.

Alternatively, the S-AMF 302 may determine that the T-AMF 303 does not support a network slice replacement function based on configuration information, etc.

In step 350, the S-AMF 302 may transmit a UE context creation message to the T-AMF 303. According to an embodiment, if the S-AMF 302 determines that the T-AMF 303 does not support network slice replacement in step 340, the S-AMF 302 may include, in the message transmitted to the T-AMF 303, a UE context excluding information related to network slice replacement.

According to an embodiment, information associated with network slice replacement may include context information (e.g., PDU session ID, S-NSSAI, alternative S-NSSAI, access type, RAT type, SMF ID, PCF ID, etc.) for a replaced PDU session (e.g., a PDU session associated with alternative S-NSSAI and S-NSSAI being replaced, or a PDU session associated with two S-NSSAIs), UE configuration information indicating that alternative S-NSSAI is to be used instead of the S-NSSAI being replaced (e.g., information expressed as mapping of alternative S-NSSAI or mapping of S-NSSAI to alternative S-NSSAI), etc.

Further, if the S-AMF 302 determines that the T-AMF 303 does not support network slice replacement in step 340, the S-AMF 302 may remove the replaced S-NSSAI and the corresponding alternative S-NSSAI from the allowed NSSAI included in the UE context transmitted to the T-AMF 303.

Further, if the S-AMF 302 determines that the T-AMF 303 does not support network slice replacement in step 340, the S-AMF 302 may remove the alternative S-NSSAI corresponding to the replaced S-NSSAI from the configured NSSAI included in the UE context transmitted to the T-AMF 303.

In step 360, a handover procedure may be performed. The UE 301 may transmit a handover confirm message to the T-RAN. Upon receiving the handover confirm message from the UE 301, the T-RAN may transmit a handover notify message for the UE 301 to the T-AMF 303.

In step 365, when the T-AMF 303 receives a handover notify message for the UE 301 from the T-RAN, the T-AMF 303 may transmit, to the S-AMF 302, a message indicating that the handover has been performed.

In step 370, if the S-AMF 302 determines in step 340 that the T-AMF 303 does not support a network slice replacement function, or if the S-AMF 302 transmits, in step 350, a UE context excluding context information for a replaced PDU session to the T-AMF 303 (e.g., when the context information for the replaced PDU session is not transmitted to the T-AMF 303), then, upon receiving, in step 365, a message from the T-AMF 303 indicating that a handover for the corresponding UE 301 has been completed, the S-AMF 302 may transmit a PDU session release request message to the SMF 305(s) in charge of the corresponding PDU session(s). Specifically, the S-AMF 302 may transmit, to the SMF 305 in charge of each PDU session, a message (e.g., Nsmf_ReleaseSMContext request) including an SM context ID of the PDU session in order to release the corresponding PDU session(s).

According to an embodiment, if the S-AMF 302 determines in step 340 that the T-AMF 303 does not support a network slice replacement function, or if the S-AMF 302 transmits, in step 350, a UE context excluding context information for a replaced PDU session to the T-AMF 303 (e.g., when context information for the replaced PDU session is not transmitted to the T-AMF 303), the S-AMF 302 may transmit, to the SMF 305 in charge of each PDU session, a message (e.g., Nsmf_UpdateSMContext request (SM context ID or PDU session ID, operation type (deactivate))) in order to deactivate the corresponding PDU session(s).

In step 375, when the SMF 305 receives the Nsmf_ReleaseSMContext request message of step 370 from the S-AMF 302, the SMF 305 may perform PDU session release for the SM context ID included in the received message. The SMF 305 may transmit a message (e.g., N4 message) to a UPF 306 in order to release the PDU session.

According to an embodiment, when the SMF 305 receives the Nsmf_UpdateSMContext request message of step 370 from the S-AMF 302, if an operation type of the received message indicates deactivation, the SMF 305 may deactivate a user plane (UP) for an SM context ID or a PDU session ID of the included PDU session. The SMF 305 may transmit, to the UPF 306, a message (e.g., N4 message) for UP deactivation of the PDU session.

In step 380, the SMF 305 may transmit, to the old AMF 302, a response message including a result indication (e.g., indicating success or failure as a result of processing). The response message may be an Nsmf_ReleaseSMContext response or an Nsmf_UpdateSMContext response according to the message received in step 370.

In step 390, the remaining handover procedures or other additional procedures for handover may be performed. According to an embodiment, after the UE 301 is handed over from the S-NG-RAN to a target NG-RAN (T-NG-RAN), the UE 301 may receive services via the T-NG-RAN and the T-AMF 303.

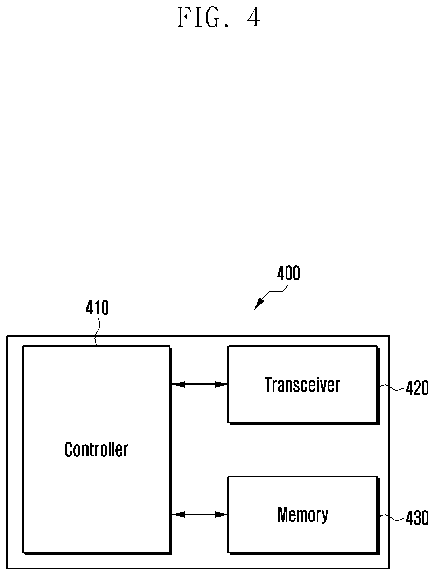

With reference to FIG. 4, a UE 400 according to an embodiment of the disclosure may include a controller 410, a transceiver 420, and a memory 430. In the disclosure, the controller 410 of the UE 400 may be defined as a circuit, an application-specific integrated circuit, or at least one processor.

The controller 410 may control the overall operation of the UE 400 according to an embodiment proposed in the disclosure. For example, the controller 410 may control the signal flow between each block to perform operations according to the drawing (or flowchart, flow diagram) described above.

The transceiver 420 may transmit and receive signals. The transceiver 420 may, for example, transmit signals to a node or a base station and receive signals from the node or the base station according to an embodiment of the disclosure.

The memory 430 may store at least one of information transmitted and received through the transceiver 420 or information generated through the controller 410. Further, the memory 430 may be defined as a storage.

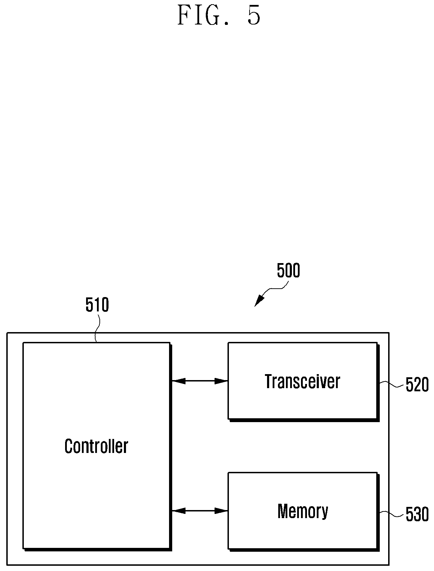

FIG. 5 is a block diagram illustrating an example of a structure of a base station according to an embodiment of the disclosure.

With reference to FIG. 5, a base station 500 according to an embodiment of the disclosure may include a controller 510, a transceiver 520, and a memory 530. In the disclosure, the controller 510 of the base station 500 may be defined as a circuit, an application-specific integrated circuit, or at least one processor.

The controller 510 may control the overall operation according to an embodiment proposed in the disclosure. For example, the controller 510 may control the signal flow between each block to perform the operation according to the drawing (or flowchart, flow diagram) described above.

The transceiver 520 may transmit and receive signals. The transceiver 520 may, for example, transmit signals to a UE or a node and receive signals from the UE or the node according to an embodiment of the disclosure.

The memory 530 may store at least one of information transmitted and received through the transceiver 520 or information generated through the controller 510. Further, the memory 530 may be defined as a storage.

Methods according to the embodiments described in the claims or the specification of the disclosure may be implemented in the form of hardware, software, or a combination of hardware and software.

In the case of being implemented in software, a computer readable storage medium storing one or more programs (software modules) may be provided. One or more programs stored in the computer readable storage medium are configured for execution by one or more processors in an electronic device. The one or more programs include instructions for causing the electronic device to execute methods according to embodiments described in the claims or the specification of the disclosure.

Such programs (software modules, software) may be stored in a random access memory, a non-volatile memory including a flash memory, a read only memory (ROM), an electrically erasable programmable ROM (EEPROM), a magnetic disc storage device, a compact disc-ROM (CD-ROM), digital versatile discs (DVDs), any other form of optical storage device, or a magnetic cassette. Alternatively, the programs may be stored in a memory composed of a combination of some or all thereof. Further, each constitution memory may be included in the plural.

Further, the program may be stored in an attachable storage device that may access through a communication network such as the Internet, Intranet, local area network (LAN), wide LAN (WLAN), or storage area network (SAN), or a communication network composed of a combination thereof. Such a storage device may access a device implementing an embodiment of the disclosure through an external port.

Further, a separate storage device on a communications network may be connected to a device performing an embodiment of the disclosure.

In the specific embodiments of the disclosure described above, components included in the disclosure are expressed in the singular or plural according to the presented specific embodiments. However, the singular or plural expression is appropriately selected for a situation presented for convenience of description, and the disclosure is not limited to the singular or plural components, and even if a component is represented in the plural, it may be composed of the singular, or even if a component is represented in the singular, it may be composed of the plural.

Embodiments of the disclosure disclosed in this specification and drawings merely present specific examples in order to easily describe the technical contents of the disclosure and help the understanding of the disclosure, and they are not intended to limit the scope of the disclosure. That is, it will be apparent to those of ordinary skill in the art to which the disclosure pertains that other modifications based on the technical spirit of the disclosure may be implemented.

Further, each of the above embodiments may be operated in combination with each other, as needed.

In the drawings for describing the method of the disclosure, the order of description does not necessarily correspond to the order of execution, and the precedence relationship may be changed or may be executed in parallel.

Alternatively, the drawings illustrating a method of the disclosure may omit some components and include only some components within the scope that does not impair the essence of the disclosure.

Further, the method of the disclosure may be implemented in a combination of some or all of the contents included in each embodiment within the scope that does not impair the essence of the disclosure.

Embodiments of the disclosure disclosed in this specification and drawings merely present specific examples in order to easily describe the technical contents of the disclosure and help the understanding of the disclosure, and they are not intended to limit the scope of the disclosure. That is, it will be apparent to those of ordinary skill in the art to which the disclosure pertains that other modifications based on the technical spirit of the disclosure may be implemented. Further, each of the above embodiments may be operated in combination with each other, as needed. For example, all embodiments of the disclosure may be operated in combination with each other.

## Claims

1. A method performed by a first access and mobility management function (AMF) in a communication system, the method comprising:
transmitting, to a second AMF, a first message comprising information indicating whether a network slice replacement (NSR) is supported;
in case that the first AMF does not support the NSR, receiving, from the second AMF, a second message for the first AMF that does not support the NSR; and
transmitting, to a terminal, a third message including information on network slice selection assistance information (NSSAI),
wherein, in case that the first AMF does not support the NSR, information associated with the NSR is excluded from the second message and the third message.

2. The method of claim 1, wherein, in case that the first AMF supports the NSR, the second message and the third message comprise the information associated with the NSR.

3. The method of claim 1, wherein the information associated with the NSR comprises at least one of information on a replaced protocol data unit (PDU) session, information on replaced single network slice selection assistance information (S-NSSAI), information on alternative S-NSSAI, or information on mapping associated with the alternative S-NSSAI.

4. The method of claim 1, wherein, in case that the first AMF does not support the NSR, the information associated with the NSR is deleted by the terminal.

5. A method performed by a terminal in a communication system, the method comprising:
receiving, from a first access and mobility management function (AMF), a third message comprising information on network slice selection assistance information (NSSAI),
wherein a first message comprising information indicating whether a network slice replacement (NSR) is supported is transmitted from the first AMF to a second AMF,
wherein, in case that the first AMF does not support the NSR, a second message for the first AMF that does not support the NSR is received by the first AMF from the second AMF, and
wherein, in case that the first AMF does not support the NSR, information associated with the NSR is excluded from the second message and the third message.

6. The method of claim 5, wherein, in case that the first AMF supports the NSR, the second message and the third message comprise the information associated with the NSR.

7. The method of claim 5, further comprising, in case that the first AMF does not support the NSR, deleting the information associated with the NSR,
wherein the information associated with the NSR comprises at least one of information on a replaced protocol data unit (PDU) session, information on replaced single network slice selection assistance information (S-NSSAI), information on alternative S-NSSAI, or information on mapping associated with the alternative S-NSSAI.

8. A first access and mobility management function (AMF) in a communication system, the first AMF comprising:
a transceiver; and
a processor coupled with the transceiver and configured to:
transmit, to a second AMF, a first message comprising information indicating whether a network slice replacement (NSR) is supported,
in case that the first AMF does not support the NSR, receive, from the second AMF, a second message for the first AMF that does not support the NSR, and
transmit, to a terminal, a third message comprising information on network slice selection assistance information (NSSAI),
wherein, in case that the first AMF does not support the NSR, information associated with the NSR is excluded from the second message and the third message.

9. The first AMF of claim 8, wherein, in case that the first AMF supports the NSR, the second message and the third message comprise the information associated with the NSR.

10. The first AMF of claim 8, wherein the information associated with the NSR comprises at least one of information on a replaced protocol data unit (PDU) session, information on replaced single network slice selection assistance information (S-NSSAI), information on alternative S-NSSAI, or information on mapping associated with the alternative S-NSSAI.

11. The first AMF of claim 8, wherein, in case that the first AMF does not support the NSR, the information associated with the NSR is deleted by the terminal.

12. A terminal in a communication system, the terminal comprising:
a transceiver; and
a processor coupled with the transceiver and configured to receive, from a first access and mobility management function (AMF), a third message comprising information on network slice selection assistance information (NSSAI),
wherein a first message comprising information indicating whether a network slice replacement (NSR) is supported is transmitted from the first AMF to a second AMF,
wherein, in case that the first AMF does not support the NSR, a second message for the first AMF that does not support the NSR is received by the first AMF from the second AMF, and
wherein, in case that the first AMF does not support the NSR, information associated with the NSR is excluded from the second message and the third message.

13. The terminal of claim 12, wherein, in case that the first AMF supports the NSR, the second message and the third message comprise the information associated with the NSR.

14. The terminal of claim 12, wherein the information associated with the NSR comprises at least one of information on a replaced protocol data unit (PDU) session, information on replaced single network slice selection assistance information (S-NSSAI), information on alternative S-NSSAI, or information on mapping associated with the alternative S-NSSAI.

15. The terminal of claim 12, wherein the processor is further configured to, in case that the first AMF does not support the NSR, delete the information associated with the NSR.
